# EUROPEAN PATENT SPECIFICATION

(11) **EP 3 719 198 B1**
(45) Date of publication and mention of the grant of the patent: **26.07.2023**
(21) Application number: 17933266.3
(22) Date of filing: 30.11.2017
(51) Int. Cl.: D06P 1/20, D06P 1/44, D06P 1/52, D06P 1/60, D06P 3/54, C09B 67/40, D06P 1/00, D06P 5/20, C09B 67/00, C09B 67/44, C09B 67/46

(54) **1-AMINO-4-HYDROXY-9,10-ANTHRAQUINONE DERIVATIVE LIQUID DISPERSE DYE, PREPARATION METHOD THEREFOR, AND USE THEREOF**
FLÜSSIGER DISPERSIONSFARBSTOFF AUS EINEM 1-AMINO-4-HYDROXY-9,10-ANTHRACHINON-DERIVAT, HERSTELLUNGSVERFAHREN DAFÜR UND VERWENDUNG DAVON
COLORANT LIQUIDE DISPERSÉ DÉRIVÉ DE 1-AMINO-4-HYDROXY-9,10-ANTHRAQUINONE, PROCÉDÉ DE PRÉPARATION ASSOCIÉ ET UTILISATION CORRESPONDANTE

(43) Date of publication of application: 07.10.2020
(73) Proprietor: Nantong Textile And Silk Industrial Technology Research Institute, Nantong, Jiangsu 226300 (CN)
(72) Inventor: AI, Li, Nantong, Jiangsu 226300 (CN); ZHU, Yawei, Nantong, Jiangsu 226300 (CN)
(74) Representative: Lang, Christian
(86) International application number: PCT/CN2017/114105
(87) International publication number: WO 2019/104697

(56) References cited:
- CN-A- 102 051 069
- CN-A- 107 761 409
- CN-A- 107 815 886
- DATABASE WPI Week 200665 1 June 2021 (2021-06-01) Thomson Scientific, London, GB; AN 2006-623824 XP002803154, -& JP 2006 225497 A (SUMITOMO CHEM CO LTD) 31 August 2006 (2006-08-31)
- DATABASE WPI Week 201669 1 June 2021 (2021-06-01) Thomson Scientific, London, GB; AN 2016-38720F XP002803155, & CN 105 672 002 A (UNIV SOOCHOW) 15 June 2016 (2016-06-15)
- DATABASE WPI Week 201011 1 June 2021 (2021-06-01) Thomson Scientific, London, GB; AN 2010-A79006 XP002803156, & CN 101 613 957 A (ZHEJIANG WANFENG CHEM CO LTD) 30 December 2009 (2009-12-30)
- DATABASE WPI Week 201728 1 June 2021 (2021-06-01) Thomson Scientific, London, GB; AN 2017-071474 XP002803157, & CN 106 320 030 A (DONGGUAN NEW MELLOW DIGITAL TEXTILE PRINTING TECHNOLOGY CO L) 11 January 2017 (2017-01-11)
- HE, Liangzhen: "Principal Method for Avoiding Color Deviation of Disperse Red 3B.", Silk, 30 April 2007 (2007-04-30), pages 32-34, XP009521470,
- ZUO, Kaijie et al.: "Short workflow Dyeing and Finishing Technology of Polyester/Cotton knitted fabric", Knitting Industries, no. 8, 31 December 2012 (2012-12-31), pages 33-35,74, XP009521443, ISSN: 1000-4033

## Description

### Technical field

The present invention belongs to the dye chemical field, specifically involved in the preparation of a liquid disperse dye, used in printing and dyeing of polyester fabric processing.

### Background Art

Document JP 2006 225497 A discloses a red-based disperse dye composition having good compatibility with a yellow disperse dye and a blue disperse dye.

Document CN 105 672 002 A discloses a method for achieving continuous pad-dry-cure dyeing of polyester, comprising the steps of padding of the polyester in a dyeing solution, drying, curing and water processing, wherein the dyeing solution comprises liquid disperse dye, prepolymer A, prepolymer B, prepolymer C, a synthetic thickener and a penetrating agent.

Document CN 101 613 957 A discloses a dyeing method of an alkali-resistant dispersed dye used by dacron ultrafine fiber, wherein the alkali-resistant dispersed dye is azocyclodextrin-coated dispersed dye.

Document CN 106 320 030 A relates to an aqueous nylon fabric dye sublimation ink for a color printing machine and a preparation technology thereof, said dye sublimation ink being composed of (in percentage by weight): 20 to 40% of disperse dye color paste, 1 to 10% of color fixing agent, 10 to 30% of humectant, 0.01 to 0.1% of surface tension adjusting agent, 0.01 to 0.5% of antifoaming agent, 0.01 to 0.5% of antiseptic, and the balance being deionized water.

Further, in general, 1-amino-4-hydroxy-9, 10-anthraquinone derivative is an important type of anthraquinone disperse dye red, its typical products are C.I. disperse red 60-O-(2-substituents C₆H₅) and ci disperse red 92-O-(2-substituents C₆H₄-SO₂-NH-C₃H₆OCH₃), is a type or heterocyclic azo red dye products cannot be replaced. 1-amino-4 hydroxyl anthraquinone derivatives in printing and dyeing processing applications, the requirement of processing conditions is extremely high, otherwise easy to generate dyeing defect. Such as dyeing medium pH value must be controlled in weak acid (4.0 ~ 6.5), as the dyeing weakly alkaline medium or fiber with alkaline substances, it is easy to blue spots on the cloth, dye color depth decreased at the same time, lead to increased wastewater chroma. In addition, the high temperature dyeing after dye solvation became purple still rendering colourful red, existing technologies need to dye color matching purple dyeing effect, obvious problems, such as the low purple brilliance, unable to present a natural color. **Technical problems**

The purpose of the present invention is to provide a liquid disperse dye, which can prevent 1-amino-4-hydroxy-9, 10-anthraquinone derivative in the dyeing process of locus coeruleus, can broaden the application of pH value, and at the same time can get a uniform dyeing effect and higher utilization of dye.

### Technical solutions

For the purpose of the invention, the liquid disperse dye of claim 1 is provided, which by mass percentage, is composed of:
1-amino-4-hydroxy-9, 10-anthraquinone derivatives 8 - 30%,
CNF 1.0 - 4.0%,
1815 0.5 - 2.5%,
Sodium polyacrylate 0.3 - 0.8%,
Water-soluble polyester 2.0 - 5.0%,
Water-soluble polyalkylene glycol 0.3 - 0.5%,
the rest is water.

In one embodiment of the invention, the molecular weight of the sodium polyacrylate is 5000 ~ 8000. The molecular weight of the water-soluble polyester is 6000 ~ 12000. The molecular weight of the water-soluble polyether is 5000 ~ 8000.

In the present invention, the liquid disperse dye has a particle size of 0.8 ~ 1.1 µm.

The invention also discloses a preparation method of liquid disperse dyes comprising 1-amino-4 hydroxyl 9, 10-anthraquinone derivatives. First, 1-amino-4 hydroxyl 9, 10-anthraquinone derivatives, CNF, 1815 and part of water are mixed and ground. Then, sodium polyacrylate, water-soluble polyester, water-soluble polyether and residual water were added, and the liquid disperse dyes were prepared by stirring.

The invention also discloses the application of the above liquid disperse dyes in the preparation of brilliant red dyeing solutions, or in the preparation of brilliant red dyeing products; or for the bright red dyeing of polyester fabrics.

In the present invention, the dyeing temperature for a polyester fabric in bright red dyeing is 120 ~ 135°C, and the dyeing solution pH is 4.5 ~ 10.5.

The invention therefore also discloses a bright red dyeing method for polyester fabrics, including the following steps: 1-amino-4-hydroxy-9, 1 0-anthraquinone derivative, CNF, 1815 and part of water are mixed and ground; then adding sodium polyacrylate, water-soluble polyester, water-soluble polyether and residual water, so as to obtain the brilliant red liquid disperse dye. Then a polyester fabric to be dyed, the bright red liquid disperse dye and water were added to a dyeing machine and treated at 120 ~ 135°C for 25 ~ 40 minutes to finish bright red dyeing of the polyester fabric.

By weight percent, the described composition of the liquid disperse dye for bright red dyeing is composed of:
1-amino-4-hydroxy-9, 10-anthraquinone derivatives 8 - 30%,
disperser CNF 1.0 - 4.0%,
1815 0.5 - 2.5%,
Sodium polyacrylate 0.3 - 0.8%,
Water-soluble polyester 2.0 - 5.0%,
Water-soluble polyalkylene glycol 0.3 - 0.5%, and
the rest is water.

In the present invention, the polyester fabric is dyed bright red after being treated at 120 ~ 135°C for 25 ~ 40 minutes and then washed.

Another purpose of the present invention is to provide another liquid disperse dye and its preparation method, using the bright red 1 - amino - 4 hydroxy - 9, 10 - anthraquinone derivatives as raw material, being prepared to evenly disperse dye blue purple dye products, and at the same time can obtain uniform dyeing effect and color fastness, so that unexpected technical results have been achieved.

Said alternative liquid disperse dye, by mass percentage, is described by the following composition:
1-amino-4-hydroxy-9, 10-anthraquinone derivatives 8 - 30%,
CNF 1.0 - 4.0%,
1815 0.5 - 2.5%,
Alkali 0.1 - 0.5%,
Ethanol 0.1 - 0.5%,
Sodium polyacrylate 0.3 - 0.8%,
Water-soluble polyester 2.0 - 5.0%,
Water-soluble polyalkylene glycol 0.3 - 0.5%, and
the rest is water.

In the present invention, alkali is one or two mixtures of sodium hydroxide and borax.

In the present invention, the molecular weight of the preferred sodium polyacrylate is 5000 ~ 8000, the molecular weight of the preferred water-soluble polyester is 6000 ~ 12000, and the molecular weight of the preferred water-soluble polyether is 5000 ~ 8000. The diameter of the purplish red liquid disperse dye is 0.8 ~ 1.1 micron. First, the water-soluble polyester, polyether and sodium polyacrylate are added into the brilliant red dye system, and then the dyed fabric is dyed with high temperature dacron. The dyed fabric is no longer brilliant red, but bright purple red. Moreover, the dyed products of this kind of purple red cannot be realized by the combination of dyes.

The invention also discloses a preparation method of such liquid disperse dyes from 1-amino-4 hydroxyl 9, 10-anthraquinone derivatives. First, 1-amino-4 hydroxyl 9, 10-anthraquinone derivatives, CNF, 1815, alkali and part of water are mixed and ground. Then ethanol, sodium polyacrylate, water-soluble polyester, water-soluble polyalkylene glycol and residual water were added, and finally the purplish red liquid disperse dye was obtained by stirring.

The invention also discloses the application of the above liquid disperse dyes in the preparation of purple red dye, or the preparation of purple red dye products; or the application in purplish-red dyeing of polyester fabrics. Preferably, the dyeing temperature of polyester fabrics in purplish-red dyeing is 120 ~ 135°C. The dye system of the present invention is suitable for high-temperature dyeing of polyester fabrics, which enhances the dyeing effect_{∘}

The invention also discloses a method for dyeing polyester fabric in purple red, including the following steps: 1-amino-4-hydroxy-9, 10-anthraquinone derivative, CNF, 1815, alkali and part of water are mixed and ground; then ethanol, sodium polyacrylate, water-soluble polyester, water-soluble polyether and residual water were added, so as to obtain the purplish red liquid disperse dye by stirring. Then the polyester fabric, the purple (fuchsia) liquid disperse dye and water were added to the dyeing machine and treated at 120 ~ 135°C for 25 ~ 40 minutes to complete the fuchsia dyeing of the polyester fabric;

By weight percent, the above purple liquid disperse dye is composed of:
1-amino-4-hydroxy-9, 10-anthraquinone derivatives 8 - 30%,
CNF 1.0 - 4.0%,
1815 0.5 - 2.5%,
Alkali 0.1 - 0.5%,
Ethanol 0.1 - 0.5%,
Sodium polyacrylate 0.3 - 0.8%,
Water-soluble polyester 2.0 - 5.0%,
Water-soluble polyalkylene glycol 0.3 - 0.5%, and
the rest is water.

Preferably, the polyester fabric was treated at 120 ~ 135°C for 25 ~ 40 minutes and then washed to finish the purplish red dyeing.

In the present invention, the 1-amino-4-hydroxy-9, 10-anthraquinone derivatives are 2-substituents, and the substituents are one of the following groups: -O-C2H4-O-c2H4och3, -O-C2H4-O-C2H5, -O-C6H5, -O-C6H4-O-C8H17, -O-C6H12OH, -O-C6H4-SO2-NH-C3H6OCH3, -O-C6H4-SCH3; 1- amino -4- hydroxyl -2- phenoxy -9,10- anthraquinone is preferred.

The invention also discloses a dyed polyester fabric. The preparation method for the dyed polyester fabric includes the following steps: 1-amino-4-hydroxy-9, 10-anthraquinone derivative, CNF, 1815 and part of water are mixed and ground; Then adding sodium polyacrylate, water-soluble polyester, water-soluble polyether and residual water, so as to obtain the brilliant red liquid disperse dye by stirring. Then the polyester fabric, the bright red liquid disperse dye and water were added to the dyeing machine and treated at 120 ~ 135°C for 25 ~ 40 minutes. Then the dyed polyester fabric was washed. Alternatively, the preparation method of the dyed polyester fabric includes the following steps: 1-amino-4-hydroxy-9, 10-anthraquinone derivative, CNF, 1815, alkali and part of water are mixed and ground; Then ethanol, sodium polyacrylate, water-soluble polyester, water-soluble polyether and residual water were added, and then the purplish red liquid disperse dye was obtained by stirring. Then the polyester fabric, the purplish red liquid disperse dye and water were added to the dyeing machine, and treated at 120 ~ 135°C for 25 ~ 40 minutes, and then washed to get the dyed polyester fabric.

By weight percent, the composition of the bright red liquid disperse dye consists of:
1-amino-4-hydroxy-9, 10-anthraquinone derivatives 8 - 30%,
CNF 1.0 - 4.0%,
1815 0.5 - 2.5%,
Sodium polyacrylate 0.3 - 0.8%,
Water-soluble polyester 2.0 - 5.0%,
Water-soluble polyalkylene glycol 0.3 - 0.5%, and
the rest is water.

By weight percent, the purple liquid disperse dye is composed as follows:
1-amino-4-hydroxy-9, 10-anthraquinone derivatives 8 - 30%,
CNF 1.0 - 4.0%,
1815 0.5 - 2.5%,
Alkali 0.1 - 0.5%,
Ethanol 0.1 - 0.5%,
Sodium polyacrylate 0.3 - 0.8%,
Water-soluble polyester 2.0 - 5.0%,
Water-soluble polyalkylene glycol 0.3 - 0.5%, and
the rest is water.

The present invention adopts liquid disperse dye containing water-soluble polyester, polyether and sodium polyacrylate, which can completely avoid the appearance of blue spot when dyeing at high temperature, especially when dyeing at high temperature under alkaline condition, and has obtained unexpected technical effect. When dyed by disperse red 3B and disperse red FB, the derivatives of 1-amino-4-hydroxyanthraquinone are easy to produce blue spots. When alkali and ethanol are added into the red dye solution, the solution is directly dyed by high temperature polyester, and the dyed fabric is still bright red. In this application, it is creatively found that when water-soluble polyester, polyether and sodium polyacrylate are added after alkali and ethanol, high-temperature polyester dyeing is carried out. The dyed fabric is no longer bright red, but bright purple red, and such purple red dyed products cannot be achieved by dye blending.

### The beneficial effects of the invention

### Beneficial effects

Due to the application of the above technical scheme, the invention has the following advantages compared with the existing technology:
(1) The invention adopts a red disperse dye prepared by a mixture of "sodium polyacrylate, water-soluble polyester and water-soluble polyether", which can completely avoid the appearance of blue spots in high temperature dyeing.
(2) The present invention adopts the red disperse dye prepared by a mixture of "sodium polyacrylate, water-soluble polyester and water-soluble polyether". In high temperature dyeing, the sodium polyacrylate, water-soluble polyester and water-soluble polyether have good dyeing evenness, which is conducive to obtaining uniform dyeing effect.
(3) The preparation method of liquid disperse dye disclosed in the present invention has the application pH value up to 10.0, which is especially suitable for the pretreatment of polyester with sodium hydroxide desizing, sodium hydroxide/oxidant desizing, and the processing of polyester fabric and polyester microfiber with sodium hydroxide reduction. Solved the existing market disperse red 60 and disperse red 92 when the use of alkali on dyeing, avoid the blue spot, broaden the process adaptability, suitable for low water consumption printing and dyeing processing technology requirements.
(4) Although the liquid disperse dye prepared by the present invention is still 1-amino-4-hydroxy-2-phenoxyeol-9, 10-anthraquinone, the color of polyester dyed products at high temperature is purplish-red with uniform blue light, especially there is no need to match color, which overturns the existing technical cognition.
(5) The liquid disperse dye disclosed in the invention has a wide requirement for the pH value of polyester cloth or dyeing solution during dyeing, and the application of the pH value up to 10.0 broadens the process adaptability and is suitable for the requirements of printing and dyeing processing technology with low water consumption.
(6) The invention adopts a purple red disperse dye which is prepared by combining alkali and ethanol with a mixture of "sodium polyacrylate, water-soluble polyester and water-soluble polyether". During high temperature dyeing, the sodium polyacrylate, water-soluble polyester and water-soluble polyether have good dyeing evenness, which is conducive to obtaining uniform dyeing effect.

### Description of figures

Fig. 1 Fabric pattern of polyester dyeing with a proportion of a liquid disperse dye;
Fig. 2 Polyester dyed fabric pattern of liquid disperse dye in Example 1;
Fig. 3 Color diagram of a liquid disperse dye in Examples& Proportions;
Fig. 4 Curves of absorbance for liquid disperse dye solutions in Examples& Proportions;
Fig. 5 Polyester dyed fabric pattern of liquid disperse dye in Example 8;
Fig. 6 Polyester dyed fabric pattern of liquid disperse dye in Example 9;
Fig. 7 Polyester dyed fabric pattern of liquid disperse dye in Example 10;
Fig. 8 Polyester dyed fabric pattern of liquid disperse dye in Proportion 4.

### Examples of this invention

The technical solution of this invention will be further described below with the accompanying figures and examples.

The 1-amino-4-hydroxy-9, 10-anthraquinone derivatives, disperser CNF, 1815, sodium polyacrylate, water-soluble polyester, water-soluble polyalkylene glycol in Examples are all commercially available products.

### Example 1

Put 10.0g 1-amino-4-hydroxy-2-phenoxyeol-9, 10-anthraquinone, 2.5g dispersant CNF, 2.0g 1815 into 75.0g water. After full grinding, put 0.5g sodium polyacrylate, 5.0g water-soluble polyester, 0.4g water-soluble polyalkylene glycol into 4.6g water, to get the liquid red disperse dye A by full stirring.

### Example 2

Put 20.0g 1-amino-4-hydroxy-2-phenoxyeol-9, 10-anthraquinone, 4.0g dispersant CNF, 0.5g1815 into 65.0g water. After full grinding, put 0.8g sodium polyacrylate, 3.0g water-soluble polyester, 0.3g water-soluble polyalkylene glycol into 6.4g water, to get the liquid red disperse dye B by full stirring.

### Example 3

In the intermittent high temperature dyeing machine, add 100Kg polyester fabric (pH value of the cloth is 12.0), 4Kg liquid red disperse dye A into 800Kg water, raise the temperature to 120°C, and keep the temperature for 30min. After dyeing, wash the fabric with hot water at 50°C to make bright red polyester fabric.

### Example4

In the intermittent high temperature dyeing machine, add 100Kg polyester fabric (pH value of the cloth is 10.0), 4Kg liquid red disperse dye A into 800Kg water, raise the temperature to 120°C, and keep the temperature for 30min. After dyeing, wash the fabric with hot water at 50°C to make bright red polyester fabric.

### Examples

In the intermittent high temperature dyeing machine, add 100Kg polyester fabric (pH value of the cloth is 8.0), 4Kg liquid red disperse dye A into 800Kg water, raise the temperature to 120°C, and keep the temperature for 30min. After dyeing, wash the fabric with hot water at 50°C to make bright red polyester fabric.

### Examples

In the intermittent high temperature dyeing machine, add 100Kg polyester fabric, 2Kg liquid red disperse dye B into 800Kg water and NaOH (pH of liquid to be 10.0), raise the temperature to 120°C, and keep the temperature for 30min. After dyeing, wash the fabric with hot water at 50°C to make bright red polyester fabric.

### Example7

In the intermittent high temperature dyeing machine, add 100Kg polyester fabric, 2Kg liquid red disperse dye B into 800Kg water and NaOH (pH value of liquid to be 8.0), raise the temperature to 120°C, and keep the temperature for 30min. After dyeing, wash the fabric with hot water at 50°C to make bright red polyester fabric.

### Comparison 1

In the intermittent high temperature dyeing machine, add 100Kg polyester fabric (pH value of the cloth is 12.0), 2Kg red market distribution 3B and 800Kgwater, raise the temperature to 120°C, and keep the temperature for 30min. After dyeing, wash the fabric with hot water at 50°C to make bright red polyester fabric.

### Comparison 2

In the intermittent high temperature dyeing machine, add 100Kg polyester fabric, 2Kg red market distribution 3B, 800Kgwater and NaOH(pH value of liquid to be 10.0), raise the temperature to 120°C, and keep the temperature for 30min. After dyeing, wash the fabric with hot water at 50°C to make bright red polyester fabric.

### Comparison 3

Put 10.0g 1-amino-4-hydroxy-2-phenoxyeol-9, 10-anthraquinone, 2.5g dispersant CNF, 2.0g1815 and into 85.5g water. After full grinding, got the liquid red disperse dye AA.

In the intermittent high temperature dyeing machine, add 100Kg polyester fabric (pH value of the cloth is 12.0), 4Kg liquid red disperse dye AA and 800Kgwater, raise the temperature to 120°C, and keep the temperature for 30min. After dyeing, wash the fabric with hot water at 50°C to make bright red polyester fabric.

### Performance test

1, K/S value and unevenness: The test is performed on the UltraScan XE computer color matching device under the conditions of Des light source and 100 Angle of view. The sample is folded into 4 layers, tested 20 times, and the average value is taken. Calculation of K/S value of average relative deviation, said fabric dyeing evenness, the value is smaller, the dyeing uniformity behalf better. The results are shown by Table 1.
2, Blue spots: Observe the sample of dyed polyester cloth by people. The results are shown by Table 1.
3, The color of the waste water: Observe the color of chroma of dyed polyester residue by people. The results are shown by Table 1.
4, Color fastness: Test by AATCC 61-2010 standard, the temperature is at 50°C. The results are shown by Table 1.

**Table 1**

| Example | K/S value | Blue spots | The color of the waste water | Color fastness/level | unevenness |
|---|---|---|---|---|---|
| Example 3 | 9.49 | N/A | Light brown | 4-5 | 0.036 |
| Example 4 | 9.46 | N/A | Light brown | 4-5 | 0.039 |
| Example 5 | 9.47 | N/A | Light brown | 4-5 | 0.033 |
| Example 6 | 9.46 | N/A | Light brown | 4-5 | 0.032 |
| Example 7 | 9.48 | N/A | Light brown | 4-5 | 0.038 |
| comparison 1 | 8.68 | Lighter | Dark brown | 4 | 0.082 |
| comparison 2 | 8.45 | Heavier | Dark brown | 4 | 0.083 |
| comparison 3 | 8.88 | Lighter | Dark brown | 4-5 | 0.066 |

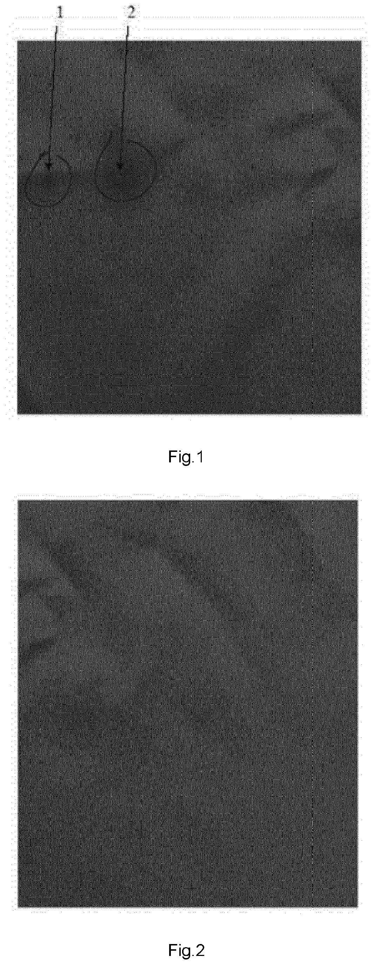

It can be seen from Table 1: the examples of the patent, no matter the pH value of polyester cloth is alkaline (pH is 8-12), or the pH value of dyeing solution is alkaline (pH is 8-10), there are no blue spots phenomenon, and the level of the color fastness is high at 4-5, and the unevenness is low, have good dyeing uniformity, the K/S value is higher, the color of the waste water is light brown. However, red market distribution 3B, when the pH value of polyester cloth is alkaline (pH is 12) or the pH value of dyeing solution is alkaline (pH is 10), there are blue spots phenomenon more or less, cause the dyeing defects of cloth, that were resolved by remediation .And the unevenness is high, have bad dyeing uniformity, the K/S value is lower, the color of the waste water is dark brown, and the level of the color fastness is just at 4. No mixture of sodium polyacrylate, water-soluble polyester, water-soluble polyalkylene glycol, it's easy to have a mild blue spots; Color fastness of the dyeing products of examples at 4-5 level, and which of comparison is 4 level. Respectively, Fig.1 & Fig.2 is dyeing polyester fabric of Comparison 1 & Example 1. We all see, there is evident blue spots area in Example 1, two points (1 and 2) are marked in the figure for your reference, the dyed product in embodiment 1 has a good dyeing effect without any blue spots; Moreover, compared with the commercially available products, the content of additives in the invention is lower, the waste water residue of the dyeing solution is shallow, and the color yield is higher.

### Example 8

Put 10.0g 1-amino-4-hydroxy-2-phenoxyeol-9, 10-anthraquinone, 1.5g dispersant CNF, 2.0g1815, 0.2g NaOH into 75.0g water. After full grinding, put 0.2g ethanol, 0.6 g sodium polyacrylate, 4.5g water-soluble polyester, 0.3g water-soluble polyalkylene glycol into 5.7g water, to get the liquid amaranth disperse dye A by full stirring.

In the intermittent high temperature dyeing machine, add 100Kg polyester fabric (pH of liquid to be 10.0), 4Kg liquid amaranth disperse dye A and 800Kgwater, raise the temperature to 120°C, and keep the temperature for 30min. After dyeing, wash the fabric with hot water at 50°C to make bright fuchsia polyester fabric.

### Example 9

Put 20.0g 1-amino-4-hydroxy-2-phenoxyeol-9, 10-anthraquinone, 3.8g dispersant CNF, 2.0g 1815, 0.5g NaOH into 65.0g water. After full grinding, put 0.3g ethanol, 0.3 g sodium polyacrylate, 5.0g water-soluble polyester, 0.4g water-soluble polyalkylene glycol into 2.7g water, to get the liquid amaranth disperse dye B by full stirring.

In the intermittent high temperature dyeing machine, add 100Kg polyester fabric (pH of liquid to be 9.0), 2Kg liquid amaranth disperse dye B and 800Kgwater, raise the temperature to 120°C, and keep the temperature for 30min. After dyeing, wash the fabric with hot water at 50°C to make bright fuchsia polyester fabric.

### Example 10

Put 10.0g 1-amino-4-hydroxy-2-phenoxyeol-9, 10-anthraquinone, 3.8g dispersant CNF, 1.0g1815, 0.5g NaOH into 75.0g water. After full grinding, put 0.3g ethanol, 0.3 g sodium polyacrylate, 5.0g water-soluble polyester, 0.4g water-soluble polyalkylene glycol into 3.7g water, to get the liquid amaranth disperse dye C by full stirring.

In the intermittent high temperature dyeing machine, add 100Kg polyester fabric (pH of liquid to be 8.0), 4Kg liquid amaranth disperse dye C and 800Kgwater, raise the temperature to 135°C, and keep the temperature for 30min. After dyeing, wash the fabric with hot water at 50°C to make bright fuchsia polyester fabric.

### Example 11

Put 10.0g 1-amino-4-hydroxy-2-phenoxyeol-9, 10-anthraquinone, 3.8g dispersant CNF, 1.0g1815, 0.3g borax, 0.2g NaOH into 75.0g water. After full grinding, put 0.3g ethanol, 0.3 g sodium polyacrylate, 5.0g water-soluble polyester, 0.4g water-soluble polyalkylene glycol into 3.7g water, to get the liquid amaranth disperse dye D by full stirring.

In the intermittent high temperature dyeing machine, add 100Kg polyester fabric, 4Kg liquid amaranth disperse dye C and 800Kgwater (pH of liquid to be 8.0), raise the temperature to 120°C, and keep the temperature for 30min. After dyeing, wash the fabric with hot water at 50°C to make bright fuchsia polyester fabric.

### Comparison 4

Put 10.0g 1-amino-4-hydroxy-2-phenoxyeol-9, 10-anthraquinone, 1.5g dispersant CNF, 2.0g1815 into 75.0g water. After full grinding, put 0.2g ethanol, 4.5g water-soluble polyester, 0.3g water-soluble polyalkylene glycol into 6.5g water, to get the liquid red disperse dye E by full stirring.

In the intermittent high temperature dyeing machine, add 100Kg polyester fabric (pH of liquid to be 10.0), 4Kg liquid red disperse dye E and 800Kgwater, raise the temperature to 120°C, and keep the temperature for 30min. After dyeing, wash the fabric with hot water at 50°C to make bright red polyester fabric.

### Comparison 5

Put 10.0g 1-amino-4-hydroxy-2-phenoxyeol-9, 10-anthraquinone, 1.5g dispersant CNF, 2.0g1815, 0.2g NaOH into 86.3g water. After full grinding, get the liquid red disperse dye F by full stirring.

In the intermittent high temperature dyeing machine, add 100Kg polyester fabric (pH of liquid to be 10.0), 4Kg liquid red disperse dye F and 800Kgwater, raise the temperature to 120°C, and keep the temperature for 30min. After dyeing, wash the fabric with hot water at 50°C to make bright red polyester fabric.

### Comparison 6

In the intermittent high temperature dyeing machine, add 100Kg polyester fabric, 2Kg red market distribution 3B, 0.2Kg NaOH ,0.2Kg ethanol into 800Kg water (pH of liquid to be 10.0), raise the temperature to 120°C, and keep the temperature for 30min. After dyeing, wash the fabric with hot water at 50°C to make bright red polyester fabric.

### Performance test

Color eigenvalue (a* & b*): Text a* & b* on computer color matching device, under the conditions of Des light source and 10°Angle of view. The sample is folded into 4 layers, tested 4 times, and the average value is taken. The results are shown by Table 2.

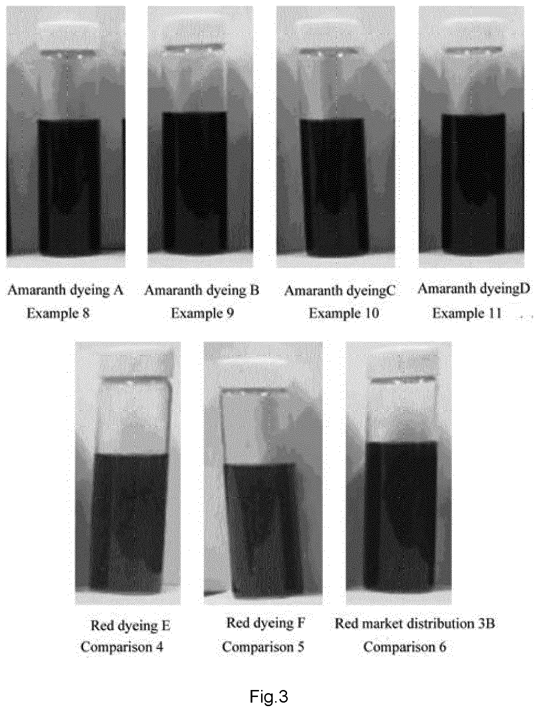

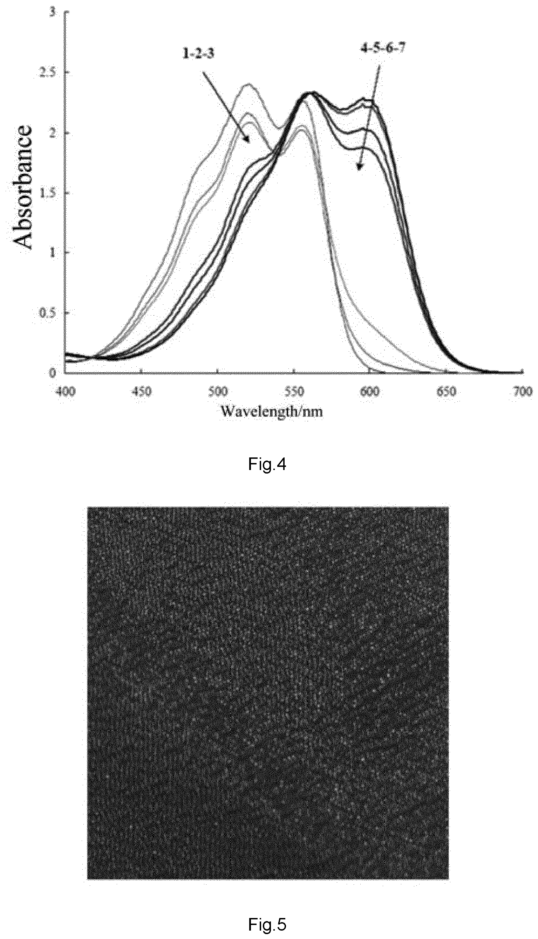

Absorbance: Take a certain amount of dye, was made dye solution, the appearance of each dye solution was shown in Fig. 3. The test of absorbance curve by TU-1810 Uv-vis spectrophotometer from each dye solution was shown in Fig. 4, thereinto 1-Example 4, thereinto 2-Example 6, thereinto 3-Example 5, thereinto 4-Example 9, thereinto 5-Example 11, thereinto 6-Example 8, thereinto 7-Example 10.

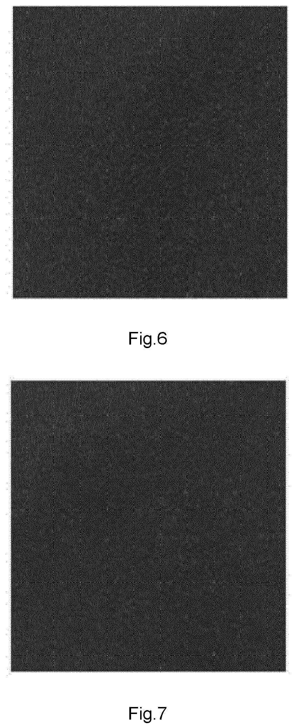

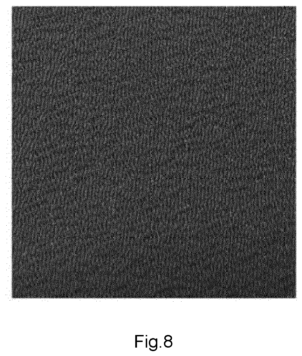

It can be seen from Fig.3 & Fig.4, the dye solution from this patent (Example 8-11) is amaranth, has maximum absorbance at 560nm & 590-600nm. the dye solution from comparisons (comparison 4-6) is bright red, has maximum absorbance at 520nm &555nm. The attached figures 5-8 refer to Example 8, Example 9, Example 10 and the dyed products of comparison 4 respectively. It can be seen that the polyester fabric dyed with disperse dyes of the present invention is bright purplish red without blue spots. Contrast dyed products are bright red.

It can be seen from Table 2: The polyester dyeing product of the dye prepared by the patent (Example 8-11), b* is below zero, the fabric is purplish red and uniform blue light. The polyester dyeing product of the dye prepared from comparisons (comparison 4-6), b* is above zero, the fabric is bright red and uniform red light. The amaranth polyester fabric was colorful from examples, and color fastness to soaping were at 4-5 level, the wet and dry friction were at 4-5 level. The color fastness to soaping from comparison 4 was at 4 -5 level, the wet and dry friction were at 4-5 level. The color fastness to soaping from comparison 5/6 was at 4 level, the wet and dry friction were at 3-4 level.

**Table 2**

| Example | Color | Coloured light | Color eigenvalue | |
|---|---|---|---|---|
| | | | a* | b* |
| Example 8 | amaranth | uniform blue light | 53.23 | -3.67 |
| Example 9 | amaranth | uniform blue light | 49.97 | -6.36 |
| Example 10 | amaranth | uniform blue light | 56.34 | -1.92 |
| Example 11 | amaranth | uniform blue light | 54.25 | -2.63 |
| Comparison 4 | bright red | uniform red light | 58.26 | 0.78 |
| Comparison 5 | bright red | uniform red light | 50.32 | 0.86 |
| Comparison 6 | bright red | uniform red light | 59.02 | 1.15 |

## Claims

1. A brilliant red liquid disperse dye, which in mass percentages is composed of:
1-amino-4-hydroxy-9, 10-anthraquinone derivative 8 - 30%,
dispersant CNF 1.0 - 4.0%, wherein dispersant CNF is a benzyl naphthalene sulfonate formaldehyde condensate,
fatty amine polyoxyethylene ether 1815 0.5 - 2.5%,
Sodium polyacrylate 0.3 - 0.8%,
Water-soluble polyester 2.0 - 5.0%,
Water-soluble polyalkylene glycol 0.3 - 0.5%, and
the rest water.

2. A purple red liquid disperse dye, which in mass percentages is composed of:
1-amino-4-hydroxy-9, 10-anthraquinone derivative 8 - 30%,
dispersant CNF 1.0 - 4.0%, wherein dispersant CNF is a benzyl naphthalene sulfonate formaldehyde condensate,
fatty amine polyoxyethylene ether 1815 0.5 - 2.5%,
Alkali 0.1 - 0.5%,
Ethanol 0.1 - 0.5%,
Sodium polyacrylate 0.3 - 0.8%,
Water-soluble polyester 2.0 - 5.0%,
Water-soluble polyalkylene glycol 0.3 - 0.5%, and the rest is water.

3. The brilliant red liquid disperse dye according to claim 1 or the purple red liquid disperse dye according to claim 2, wherein the 1-amino-4-hydroxy-9, 10-anthraquinone derivative is 2- substituents -1- amino -4- hydroxyanthraquinone, wherein the substituent is selected from -O-C₂H₄-O-C₂H₄OCH₃, -O-C₂H₄-O-C₂H₅, -O-C₆H₅, -O-C₆H₄-O-C₆H₅, -O-C₆H₄-O-C₈H₁₇, -O-C₆H₁₂OH, -O-C₆H₄-SO₂-NH-C₃H₆OCH₃, -O-C₆H₄-SCH₃; wherein the molecular weight of sodium polyacrylate is 5000 - 8000; wherein the molecular weight of water-soluble polyester is 6000 - 12000; wherein the molecular weight of water-soluble polyalkylene glycol is 5000 - 8000; and wherein the particle size of liquid disperse dyes is 0.8-1.1 µm.

4. A method for preparing the brilliant red liquid disperse dye according to claim 1 including the steps of firstly mixing the 1 - amino - 4 - hydroxy - 9, 10 - anthraquinone derivative, dispersant CNF, fatty amine polyoxyethylene ether 1815 and part of the water, followed by grinding; and then adding the sodium polyacrylate, water-soluble polyester, water-soluble polyalkylene glycol and the residual water, wherein the liquid disperse dye is obtained by stirring.

5. The brilliant red liquid disperse dye according to claim 1 for use in preparation of a bright red dye solution or brilliant red dyeing products.

6. A method for dyeing polyester fabrics in brilliant red, **characterized by**, including the following steps: (1) preparing the brilliant red liquid disperse dye according to the method of claim 4; (2) then adding a polyester fabric, the brilliant red liquid disperse dye obtained in step (1) and water to a dyeing machine and (3) treating at 120 ~ 135°C for 25 ~ 40 minutes to complete the bright red dyeing of the polyester fabric .

7. A method for preparing the purple red liquid disperse dye according to claim 2, including the steps of firstly mixing the 1 - amino - 4 - hydroxy - 9, 10 - anthraquinone derivative, dispersant CNF, fatty amine polyoxyethylene ether 1815 , alkali and part of the water, followed by grinding; and then adding the ethanol, sodium polyacrylate, water-soluble polyester, water-soluble polyalkylene glycol and the residual water, wherein the purple red liquid disperse dye is obtained by stirring.

8. The purple red liquid disperse dye according to claim 2 for use in preparation of a purple red dye solution, or purple red dye products.

9. A method for dyeing polyester fabrics in purple red, **characterized by**, including the following steps: (1) preparing the bright purple red liquid disperse dye by the method of claim 7; (2) then adding the polyester fabric, the liquid disperse dye obtained in step (1) and water to a dyeing machine and (3) treating at 120 ~ 135°C for 25 ~ 40 minutes to complete dyeing of the polyester fabric in purple red.

## Patentansprüche

1. Brillantroter flüssiger Dispersionsfarbstoff, der in Massenprozentanteilen zusammengesetzt ist aus:
1-Amino-4-Hydroxy-9,10-Anthrachinon-Derivat 8-30%,
Dispergiermittel CNF 1,0-4,0%, wobei das Dispergiermittel CNF ein Benzylnaphthalinsulfonat-Formaldehydkondensat ist,
Fettamin-Polyoxyethylenether 1815 0,5-2,5%,
Natriumpolyacrylat 0,3-0,8%,
wasserlöslicher Polyester 2,0-5,0%,
wasserlösliches Polyalkylenglykol 0,3-0,5%, und
der Rest ist Wasser.

2. Purpurroter flüssiger Dispersionsfarbstoff, der in Massenprozentanteilen zusammengesetzt ist aus:
1-Amino-4-Hydroxy-9,10-Anthrachinon-Derivat 8-30%,
Dispergiermittel CNF 1,0-4,0%, wobei das Dispergiermittel CNF ein Benzylnaphthalinsulfonat-Formaldehydkondensat ist,
Fettamin-Polyoxyethylenether 1815 0,5-2,5%,
Alkali 0,1-0,5%,
Ethanol 0,1-0,5%,
Natriumpolyacrylat 0,3-0,8%,
wasserlöslicher Polyester 2,0-5,0%,
wasserlösliches Polyalkylenglykol 0,3-0,5%, und
der Rest ist Wasser.

3. Brillantroter flüssiger Dispersionsfarbstoff nach Anspruch 1 oder purpurroter flüssiger Dispersionsfarbstoff nach Anspruch 2, wobei das 1-Amino-4-Hydroxy-9,10-Anthrachinon-Derivat ist 2-Substituenten-1-Amino-4-Hydroxyanthrachinon, wobei der Substituent ausgewählt ist aus -O-C₂H₄-O-C₂H₄OCH₃, -O-C₂H₄-O-C₂H₅, -O-C₆H₅, -O-C₆H₄-O-C₆H₅, -O-C₆H₄-O-C₈H₁₇, -O-C₆H₁₂OH, -O-C₆H₄-SO₂-NH-C₃H₆OCH₃, -O-C₆H₄-SCH₃; wobei das Molekulargewicht von Natriumpolyacrylat 5000-8000 beträgt; wobei das Molekulargewicht von wasserlöslichem Polyester 6000-12000 beträgt; wobei das Molekulargewicht von wasserlöslichem Polyalkylenglykol 5000-8000 beträgt, und wobei die Teilchengröße von flüssigen Dispersionsfarbstoffen ist 0,8-1,1 µm.

4. Verfahren zur Herstellung des brillantroten flüssigen Dispersionsfarbstoffs nach Anspruch 1, die Schritte einschließend von zuerst Mischen des 1-Amino-4-Hydroxy-9,10-Antrachinon-Derivats, des Dispergiermittels CNF, des Fettaminpolyoxyethylenethers 1815 und eines Teils des Wassers, gefolgt von Mahlen; und dann Zugabe des Natriumpolyacrylats, des wasserlöslichen Polyesters, des wasserlöslichen Polyalkylenglykols und des restlichen Wassers, wobei der flüssige Dispersionsfarbstoff durch Rühren erhalten wird.

5. Brillantroter flüssiger Dispersionsfarbstoff nach Anspruch 1 zur Verwendung bei der Herstellung einer leuchtend roten Farbstofflösung oder brillantroter Farbstoffprodukte.

6. Verfahren zum Färben von Polyestergeweben in Brillantrot, **dadurch gekennzeichnet, dass** es die folgenden Schritte umfasst: (1) Herstellung des brillantroten flüssigen Dispersionsfarbstoffs gemäß dem Verfahren nach Anspruch 4; (2) anschließende Zugabe eines Polyestergewebes, des in Schritt (1) erhaltenen brillantroten flüssigen Dispersionsfarbstoffs und von Wasser zu einer Färbemaschine und (3) Behandlung bei 120-135°C für 25~40 Minuten, um die brillantrote Färbung des Polyestergewebes zu vervollständigen.

7. Verfahren zur Herstellung des purpurroten flüssigen Dispersionsfarbstoffs nach Anspruch 2, die folgenden Schritte einschließend von zunächst Mischen des 1-Amino-4-Hydroxy-9,10-Antrachinon-Derivats, des Dispergiermittels CNF, des Fettaminpolyoxyethylenethers 1815, des Alkalis und eines Teils des Wassers, das durch Zerkleinern erhalten wird; und dann Zugabe des Ethanols, des Natriumpolyacrylats, des wasserlöslichen Polyesters, des wasserlöslichen Polyalkylenglykols und des restlichen Wassers, wobei der purpurrote flüssige Dispersionsfarbstoff durch Rühren erhalten wird.

8. Purpurroter flüssiger Dispersionsfarbstoff nach Anspruch 2 zur Verwendung bei der Herstellung einer purpurroten Farbstofflösung oder von purpurroten Farbstoffprodukten.

9. Verfahren zum Färben von Polyestergeweben in Purpurrot, **dadurch gekennzeichnet, dass** es die folgenden Schritte umfasst: (1) Herstellen des leuchtend purpurroten flüssigen Dispersionsfarbstoffs nach dem Verfahren des Anspruchs 7; (2) anschließendes Einbringen des Polyestergewebes, des in Schritt (1) erhaltenen flüssigen Dispersionsfarbstoffs und von Wasser in eine Färbemaschine und (3) Behandeln bei 120-135°C für 25~40 Minuten, um das Färben des Polyestergewebes in Purpurrot zu vervollständigen.

## Revendications

1. Colorant dispersé liquide rouge brillant qui, en pourcentage de masse, est composé de :
dérivé de 1-amino-4-hydroxy-9,10-anthraquinone 8-30 %,
dispersant CNF 1,0-4,0 %, dans lequel le dispersant CNF est un condensat de formaldéhyde de benzyl naphtalène sulfonate,
éther de polyoxyéthylène d'amine grasse 1815 0,5-2,5 %,
polyacrylate de sodium 0,3-0,8 %,
polyester soluble dans l'eau 2,0-5,0 %,
polyalkylène glycol soluble dans l'eau 0,3-0,5 %, et
le reste d'eau.

2. Colorant dispersé liquide rouge pourpre qui, en pourcentage de masse, est composé de :
dérivé de 1-amino-4-hydroxy-9,10-anthraquinone 8-30 %,
dispersant CNF 1,0-4,0 %, dans lequel le dispersant CNF est un condensat de formaldéhyde de benzyl naphtalène sulfonate,
éther de polyoxyéthylène d'amine grasse 1815 0,5-2,5 %,
alcali 0,1-0,5 %,
éthanol 0,1-0,5 %,
polyacrylate de sodium 0,3-0,8 %,
polyester soluble dans l'eau 2,0-5,0 %,
polyalkylène glycol soluble dans l'eau 0,3-0,5 %, et le reste est de l'eau.

3. Colorant dispersé liquide rouge brillant selon la revendication 1 ou colorant dispersé liquide rouge pourpre selon la revendication 2, dans lequel le dérivé de 1-amino-4-hydroxy-9,10-anthraquinone est 2-substituants-1-amino-4-hydroxyanthraquinone, dans lequel le substituant est sélectionné parmi -O-C₂H₄-OC₂H₄OCH₃, -O-C₂H₄-O-C₂H₅, -O-C₆H₅, -O-C₆H₄-O-C₆H₅,-O-C₆H₄-O-C₈H₁₇, -OC₆H₁₂OH, -O-C₆H₄-SO₂-NH-C₃H₆OCH₃, -O-C₆H₄-SCH₃ ; dans lequel le poids moléculaire du polyacrylate de sodium est compris entre 5 000 et 8 000 ; dans lequel le poids moléculaire du polyester soluble dans l'eau est compris entre 6 000 et 12 000 ; dans lequel le poids moléculaire du polyalkylène glycol soluble dans l'eau est compris entre 5 000 et 8 000 ; et dans lequel la taille de particules des colorants dispersés liquides est comprise entre 0,8 et 1,1 µm.

4. Procédé de préparation du colorant dispersé liquide rouge brillant selon la revendication 1, incluant les étapes consistant à d'abord mélanger le dérivé de 1-amino-4-hydroxy-9,10-anthraquinone, le dispersant CNF, l'éther de polyoxyéthylène d'amine grasse 1815 et une partie de l'eau, suivi d'un broyage ; puis à ajouter le polyacrylate de sodium, le polyester soluble dans l'eau, le polyalkylène glycol soluble dans l'eau et l'eau résiduelle, dans lequel le colorant dispersé liquide est obtenu par agitation.

5. Colorant dispersé liquide rouge brillant selon la revendication 1 pour une utilisation dans la préparation d'une solution de colorant rouge brillant ou de produits de teinture rouge brillant.

6. Procédé de teinture de tissus en polyester en rouge brillant, **caractérisé en ce qu'**il inclut les étapes suivantes consistant à : (1) préparer le colorant dispersé liquide rouge brillant selon le procédé de la revendication 4 ; (2) ajouter ensuite un tissu en polyester, le colorant dispersé liquide rouge brillant obtenu à l'étape (1) et de l'eau dans une machine à teindre et (3) traiter à 120~135 °C pendant 25~40 minutes pour terminer la teinture rouge brillant du tissu en polyester.

7. Procédé de préparation du colorant dispersé liquide rouge pourpre selon la revendication 2, incluant les étapes consistant à d'abord mélanger le dérivé de 1-amino-4-hydroxy-9,10-anthraquinone, le dispersant CNF, l'éther de polyoxyéthylène d'amine grasse 1815, l'alcali et une partie de l'eau, suivi d'un broyage ; puis à ajouter l'éthanol, le polyacrylate de sodium, le polyester soluble dans l'eau, le polyalkylène glycol soluble dans l'eau et l'eau résiduelle, dans lequel le colorant dispersé liquide rouge pourpre est obtenu par agitation.

8. Colorant dispersé liquide rouge pourpre selon la revendication 2 pour une utilisation dans la préparation d'une solution de colorant rouge pourpre ou de produits de teinture rouge pourpre.

9. Procédé de teinture de tissus en polyester en rouge pourpre, **caractérisé en ce qu'**il inclut les étapes suivantes consistant à : (1) préparer le colorant dispersé liquide rouge pourpre vif selon le procédé de la revendication 7 ; (2) ajouter ensuite le tissu en polyester, le colorant dispersé liquide obtenu à l'étape (1) et de l'eau dans une machine à teindre et (3) traiter à 120~135 °C pendant 25~40 minutes pour terminer la teinture du tissu en polyester en rouge pourpre.
